(19) Europäisches Patentamt
European Patent Office
Office européen des brevets

(11) **EP 1 944 081 A1**

(12) **EUROPEAN PATENT APPLICATION**
published in accordance with Art. 153(4) EPC

(43) Veröffentlichungstag:
**16.07.2008   Patentblatt 2008/29**

(51) Int Cl.:
**B01J 19/12** *(2006.01)*

(21) Anmeldenummer: **06824454.0**

(22) Anmeldetag: **24.10.2006**

(86) Internationale Anmeldenummer:
**PCT/RU2006/000554**

(87) Internationale Veröffentlichungsnummer:
**WO 2007/114731 (11.10.2007 Gazette 2007/41)**

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.10.2005   RU 2005132970**

(71) Anmelder:
• **Vershinin, Nikolay Petrovich**
  **Rostovskaya obl. 347600 (RU)**
• **Vershinin, Igor Nikolaevich**
  **Moskovskaya obl. 142100 (RU)**

(72) Erfinder:
• **Vershinin, Nikolay Petrovich**
  **Rostovskaya obl. 347600 (RU)**
• **Vershinin, Igor Nikolaevich**
  **Moskovskaya obl. 142100 (RU)**

(74) Vertreter: **Fleck, Hermann-Josef**
  **Klingengasse 2/1**
  **71657 Vaihingen/Enz (DE)**

(54) **PROZESSAKTIVIERUNGSEINHEIT**

(57)   Die Erfindung betrifft eine Einrichtung zur Aktivierung der Prozesse, welche eine Arbeitseinheit mit einem wasser- oder ölhaltigen Induktor, eine Steuerungs- und eine Wärmeschutzeinheit aufweist. Die Arbeitseinheit verfügt über ein Beschickungssystem und ein System zur Abführung der verarbeiteten Stoffe, wobei diese Systeme unmittelbar im Arbeitsbereich in Form von Schnecken und Luftschrauben eingebaut sind. Dadurch können ein erhöhter Nutzungsgrad des Stromes, eine erhöhte verfahrenstechnische Effizienz und eine ausreichende Betriebssicherheit erreicht werden.

Fig. 1

EP 1 944 081 A1

## Beschreibung

Die Erfindung betrifft eine Einrichtung zur Aktivierung von Prozessen. Sie weist eine Arbeitseinheit mit einem wasser- oder ölartigen Induktor, eine Steuerungs- und eine Wärmeschutzeinheit auf.

Es sind Einrichtungen zur Beschleunigung der physikalischen und chemischen sowie der mechanischen und physikalischen Prozesse sowie Einrichtungen für die verfahrenstechnischen Abläufe sind bekannt.

Bekannt sind russische Patente für Wirbelschichtanlagen (nachfolgend WSA genannt) [1-5]. Die Funktionsweise dieser Geräte wurde von D.D. Logwinenko [6] und N.P. Werschinin [7-9] beschrieben. In den Patenten [1-5] werden Betriebsmodi der WSA genannt, die für die Anwendung in verfahrenstechnischen Abläufen nicht geeignet sind.

Der Aktivator der Flüssigkeit [1] ist zum Beispiel mit Bimetallnadeln versehen, deren Oberfläche mit Titan geschützt ist. Es ist bekannt, dass Titan und Eisen, wie jedes ferromagnetische Material, unterschiedliche Ausdehnungskoeffizienten bei magnetischen und mechanischen Striktionserscheinungen aufweisen (für Ti - 9,20 $10^{-6}$ 1/K [12], für Fe - 1,17 $10^{-5}$ 1/K [11]). Dadurch wird die Titanoberschicht zerstört und aus dem Arbeitsbereich des genannten Aktivators ausgetragen. Die bekannten Erfahrungsdaten zeigen, dass eine zerbrechliche Wand aus Keramik wesentlich schneller als eine Wand aus Stahl Ch18N10T gemäß GOST 5632-72*[6] zerstört wird. Außerdem sind die plattierten Nadeln um das Vielfache teuerer als die Nadeln aus Stahl, was den Fertigungsablauf verteuert.

Die von den Autoren [1] betonte Möglichkeit, schnell die Anzahl der Nadeln im Aktivator der Flüssigkeit zu ändern, wird bei praktischer Verwendung in Frage gestellt. So muss zum Beispiel bei der Beschickung mit Nadeln mit einem Gewicht von 200 g und dem Verhältnis der Länge zum Durchmesser von 5 bis 15, bei einem Durchmesser von 0,5 bis 1,5 mm, die Anzahl der Nadeln im Arbeitsteil des Aktivators von 50.000 auf 645 Stück geändert werden. D. h., der Unterschied erreicht fast drei Größenordnungen. Deshalb bereitet die Auswahl einer optimalen Anzahl der Nadeln und deren Größe große Schwierigkeiten. Außerdem ist die Wahrscheinlichkeit von Fehlern bei der Festlegung der Anzahl der Nadeln zu groß.

Im Patent [2] ist der Arbeitsbereich der "Frequenz" einer Einrichtung für die Zubereitung der Wasser-Kraftstoff-Emulsionen angegeben. Es ist dabei offensichtlich die Anzahl der Umdrehungen gemeint, welche 1400 ... 3000 Umdrehungen pro Minute des elektromagnetischen Felds beträgt. Bei 1400 U/min wird fast gar keine Kavitation beobachtet [10]. Die Magnet- und Striktionserscheinungen weisen eine niedrige E-nergiebelastung auf, welche nicht fähig ist, tief auf den Werkstoff einzuwirken. Im Endeffekt wird diese Einrichtung als leistungsarmer Mischer funktionieren.

In den Patenten [3, 4] ist angegeben, dass die Verweilzeit des Stoffes im Arbeitsbereich der WSA 2..5 bzw. 10 bis 60 s bei Temperaturen von 150° C und 350° C ausreichend ist. Die genannten Temperaturwerte sind für Betriebsverhältnisse nicht annehmbar, weil die Isolation der Wicklungen eines Induktors nur kurzfristig die Temperatur bis 120° C aushalten kann. Die Verweilzeit zeugt davon, dass es um ein Zyklusverfahren geht, welches seinerseits eine niedrige Leistung aufweist. Die Leistung dieser Einrichtung nähert sich der Leistung einer Laboreinrichtung an. Die Notwendigkeit der Vorwärmung der Rohstoffe erschwert den verfahrenstechnischen Ablauf, erhöht den Energieaufwand für ein Fertigprodukt und reduziert dadurch deutlich die Rentabilität der Produktion.

Alle Geräte, die in den Patenten [1-5] beschrieben sind, weisen einen niedrigen cos φ-Wert (max. 0,10...0,15) auf. Das zeugt von großen Stromverlusten. Um die Leistung des gelieferten Stroms zu verändern, werden 2- oder 3-Stufentransformatoren verwendet. Es ist offensichtlich, dass eine solch grobe Leistungsregelung es nicht ermöglicht, die Geräte fein einzustellen. Deshalb gehen sie oft außer Betrieb oder weisen einen niedrigen Wirkungsgrad auf.

Alle bekannten WSA und Einrichtungen zur Aktivierung der Prozesse (im Weiteren VAP genannt) laufen mit dem Strom der Industriefrequenz von 50 Hz. Da die Nadeln als Energiequelle im Arbeitsbereich der WSA und VAP dienen, kann ihre Funktionseffizienz mit der Erhöhung der Frequenz durch die Vermehrung der Anzahl der Ereignisse der magnetischen Striktion vergrößert werden.

Im Zusammenhang damit können die Konstruktionen und das Verfahren nicht als vergleichbare Erzeugnisse verwendet werden.

Als der der Erfindung am nächsten kommende Stand der Technik und Prototyp wurde eine WSA [7] ausgewählt. Diese WSA besteht aus einem Arbeitsbereich mit einem wasser- oder ölgekühlten Induktor sowie aus einer Steuerungs- und Wärmeschutzeinheit. Diese Anlage wurde der Werksprüfung unterzogen und kann ununterbrochen betrieben werden.

Die Anlage weist eine Reihe von Mängeln auf:

1. Keine Frequenzregelung vorhanden.
2. Die Regelung der zugeführten Leistung erfolgt mit Hilfe von 3-Stufentransformatoren.
3. In bestimmten Fällen müssen die Ausgangsrohstoffe vorgewärmt werden.
4. Niedriger cos φ-Wert.
5. Das Vorhandensein eines Gitters am Auslauf des Arbeitsbereiches.
6. Die erschwerte Bewegung entlang des Arbeitsbereichs der zu bearbeitenden trockenen Pulver.
7. Die erschwerte Bearbeitung der heterogenen Systeme Flüssigkeit-Feststoff.

8. Relativ niedrige Leistung der Anlage.

Es ist Aufgabe der Erfindung, eine Einrichtung der eingangs erwähnten Art zu schaffen, die einen erhöhten Nutzungsgrad des Stromes, eine erhöhte verfahrenstechnische Effizienz und ausreichende Betriebssicherheit aufweist.

Diese Aufgabe wird gemäß der Erfindung dadurch gelöst, dass die Arbeitseinheit über ein Beschickungssystem und ein System zur Abführung der verarbeiteten Stoffe verfügt, wobei diese Systeme unmittelbar im Arbeitsbereich in Form von Schnecken und Luftschrauben eingebaut sind.

Eine in der Leistung verbesserte Ausgestaltung der Einrichtung ist dadurch gekennzeichnet, dass die Fläche des Querschnitts der Arbeitseinheit am Auslauf um 20 bis 25 % größer als die Fläche des Querschnitts der Arbeitseinheit am Einlauf ist. Dabei ist der Durchmesser der Flanken der Abführschnecke entsprechend vergrößert, um die Leistung der Abführschnecke um das 2,0- bis 2,5-fache zu erhöhen.

Die Abdichtung der Förderschnecken im Arbeitsbereich ist dadurch gewährleistet, dass die Flanken der Abführschnecke aus elastischem Material, wie z.B. Gummi, bestehen, wobei deren Außenkanten die Innenoberflächen der Arbeitseinheit berühren. Dadurch wird auch die Anhaftung des Materials an den Wandungen des Arbeitsbereiches (Rohr) verhindert.

Die Förderung im Arbeitsbereich ist dadurch sichergestellt, dass auf der gemeinsamen Welle der abführenden Welle, die auf 60 % bis 70 % der Länge in den Arbeitsbereich hineingeht, alle 50 mm bis 100 mm Luftschrauben angeordnet sind, mindestens jedoch 3 Stück. Ferner ist vorgesehen, dass am Auslauf des Arbeitsbereiches und zwar an der Grenze des aktiven elektromagnetischen Feldes eine Hülse mit einem runden Querschnitt und einer Öffnung eingebaut ist, deren Querschnittsfläche 70 % bis 80 % des Querschnitts des Arbeitsbereiches beträgt und dass die Hüllenseite, die zum Arbeitsbereich gerichtet ist, einen Winkel von 20° bis 40° bildet.

Die Stromversorgung der Einrichtung sieht vor, dass sie mit einem Frequenzregler des Stromes von 50 bis 1000 Hz und mit einem Leistungsregler ausgestattet ist, der vor dem Induktor in einem Intervall von 5 bis 100 kw installiert ist und die Leistung ununterbrochen regelt und dass sie mit einem kontaktlosen Phasenumschalter mit einer Umschaltfrequenz von 50 bis 5000 Perioden pro Sekunde ausgestattet ist.

Eine vorteilhafte Weiterbildung sieht vor, dass sie mit einem Auffänger für Gleitnadeln ausgestattet ist, welcher in zylindrischer Form mit einem Tangentialeinlauf für die flüssige Phase oder in Form eines elektromagnetischen Ringes oder einer Fläche für trockenes Pulver ausgebildet ist und dass sie aus mehreren Arbeitseinheiten besteht und ein gemeinsames Netzteil, eine Steuerungseinheit, einen Frequenzregler, einen kontaktlosen Phasenumschalter und einen gemeinsamen Kühlkreis für Induktoren aufweist.

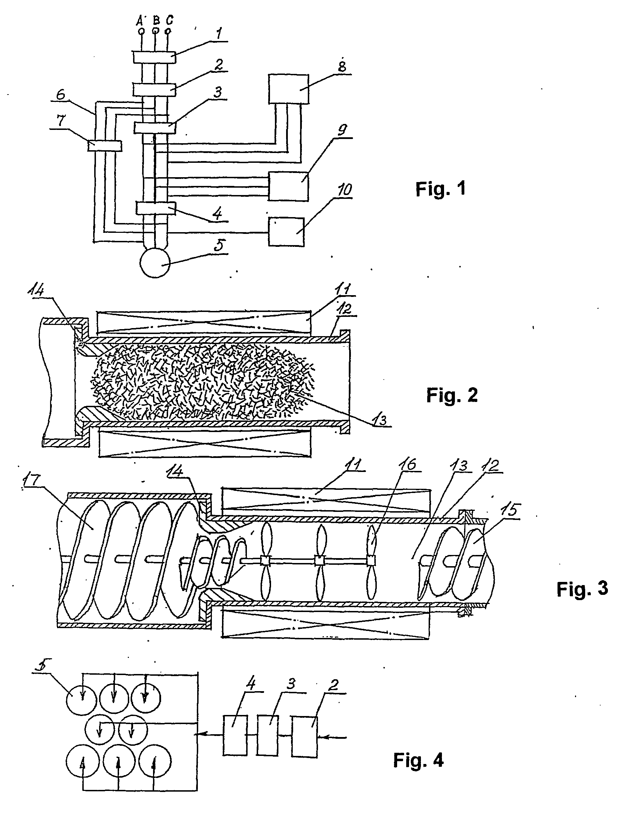

Die Einrichtung kann auch ohne Frequenzregler und ohne kontaktlosen Phasenumschalter im Stromkreislauf ausgerüstet sein. Die Erhöhung der Frequenz des Wechselstromkreises erfolgt mittels eines Frequenzreglers im Bereich von 50 Hz bis 1000 Hz. Der Regler wird nach dem automatischen Schalter (Fig. 1) eingebaut. Die Erhöhung der Wechselstromfrequenz erhöht proportional die Anzahl der Ereignisse der magnetischen Striktion, welche die Hauptenergiequellen darstellen, die auf das Material im Arbeitsbereich einwirken. Die Folge davon ist die Intensivierung der physikalischen Einwirkung und der chemischen Reaktionen und die Beschleunigung der Betriebsabläufe ohne eine Erhöhung des Leistungsbedarfes. Deswegen ist die Frequenzregelung für die Feineinstellung der verfahrenstechnischen Abläufe wichtig.

Der 3-Stufentransformator wird durch einen Regler mit stufenloser Veränderung der zugeführten Leistung ersetzt. Der Leistungsregler ermöglicht die Grobeinstellung von VAP. Die Anlage kann vor und nach dem Frequenzregler eingebaut werden.

Um die chemischen Reaktionen zu beschleunigen, erfolgt die Aufwärmung der Ausgangskomponente unmittelbar im Arbeitsbereich. Das erfolgt mit Hilfe der kinetischen Energie der Nadelnbewegung, die in Wärmeenergie umgewandelt wird. Die Nadeln bewegen sich in der Arbeitszone unter Wirkung des äußeren sich drehenden elektromagnetischen Felds. Die Bewegung erfolgt vorwiegend über eine Kreisbahn (keine chaotische Bewegung, wie es in den Patenten [1-5] behauptet wird). Die Kreisbahn kann sich verzerren, aber sie behält auf jeden Fall ihre Laufbahn-Funktion. Jede Nadel erreicht fast sofort ihre Energiestufe, die eine Funktion für folgende Parameter darstellt:

$$Q = f\,(v,\ m,\ n,\ H,\ l,\ d,\ M,\ t_Z,\ t_E) \qquad\qquad (1),$$

worin:
Q - die kinetische Energie;
V - die Geschwindigkeit der Nadel-Bewegung;
m - die Masse einer Nadel;
n - die Anzahl der Zyklen Beschleunigung-Stillstand;
H - die Stärke des elektromagnetischen Felds;

f - die Länge der Nadeln;

d - der Durchmesser der Nadeln;

M - die Masse aller Nadeln;

$t_z$ - Dauer eines Zyklus Beschleunigung-Stillstand;

$T_E$ - die Expositionsdauer

ist.

Es ist bekannt, dass sich die kinetische Energie in Wärmeenergie umwandelt, wenn eine sich bewegende Nadel angehalten wird. Dabei soll das Anhalten der Nadeln blitzschnell erfolgen. Wenn die Energie impulsartig abgegeben wird, setzt die Nadel ihre Bewegung nach einem Impuls nach dem Trägheitsgesetz fort, und die Umwandlung der Energie in Wärme ist innerhalb einer Zeiteinheit gering. Wenn die Vektorrichtung des sich drehenden elektromagnetischen Felds auf die Gegenrichtung relativ schnell geändert wird, dann erfolgt eine schnelle Bremsung der Nadel. Eine solche Bremsung wird einem Stoß gleichgestellt. In diesem Fall erfolgt die Wärmeenergieabgabe.

So kann bei 50 bis 70 Zyklen pro Sekunde Beschleunigung-Stillstand die Menge der zusätzlichen Energie 5 bis 10 % betragen. Dabei steigt die Temperatur im Arbeitsbereich sehr schnell auf 100-300° C an. Der genannte Vorgang erfolgt mit Hilfe einer kontaktlosen Umschaltung von zwei Phasen mittels eines speziellen Umschalters, welcher unmittelbar vor VAP eingebaut ist. Die Energie für die Heizung des Volumens des Arbeitsbereichs stellt hauptsächlich eine reaktive Energie dar. Der Einsatz dieser Energie erhöht teilweise den cos φ-Wert.

Bei der Umschaltung der Phasen wird VAP nur kurzzeitig stromlos. Aber unter Berücksichtigung der großen Anzahl der Umschaltungen ist die Stromeinsparung bedeutend.

WSA und VAP sind in der Regel [1-6] am Auslauf des Arbeitsbereichs mit Gittern ausgestattet, was die Durchlauffähigkeit reduziert. Außerdem besteht immer die Gefahr der Verstopfung. Beim Betrieb der WSA und VAP wird eine Anzahl der Nadeln zusammen mit dem bearbeiteten Material ausgetragen. Das elektromagnetische Feld hält die meisten Nadeln im Arbeitsbereich zurück. Aber das Feld ist nicht homogen. Es stellt äußerlich einen Drehkörper in Form einer stark ausgedehnten Ellipse mit verwischten Ovalen an den Enden des Arbeitsbereiches dar. Nadeln, wenn sie in diese Zonen mit einer niedrigen Feldstärke gelangen, können unter Wirkung der Zentrifugalkraft und des Drucks des Materialstroms die Haltekraft des abgeschwächten Felds überwinden und den Arbeitsbereich verlassen (Fig. 2).

Um die Verluste der Nadeln am Auslauf des Arbeitsbereiches zu reduzieren, ist die Hülse so eingebaut, dass sie das Volumen des Arbeitsbereiches ausfüllt, in welchem die Feldstärke wesentlich reduziert ist und daher die Nadeln nicht halten kann. Dabei soll die Hülse dem Strom des bearbeiteten Materials keinen großen Widerstand leisten.

Gemäß Erfahrungsdaten soll die Fläche des Querschnitts der Hülsenöffnung maximal 70 bis 80 % der Fläche des Querschnitts des Arbeitsbereiches betragen. Die Verluste der Nadeln werden bei Vorhandensein der Hülse um das Mehrfache reduziert. Aber es wird trotzdem einen Durchfluss geben. Bei einem langen ununterbrochenen Prozess kann die Anzahl der Durchflüsse bedeutend sein. Um alle Nadeln aufzufangen, wird die angemeldete VAP mit einem Auffänger ausgestattet. Der Auffänger soll unmittelbar nach dem Arbeitsbereich angeordnet werden. Dabei wird der Strom des abgearbeiteten Materials ins Zylindergehäuse des Auffängers tangential geleitet.

Bei der Bearbeitung flüssiger Medien werden diese entlang dem Arbeitsbereich mit Hilfe des Drucks einer Pumpe oder einer Flüssigkeitssäule drucklos gemischt. Die Bewegung der harten Pulver wird erschwert, wenn während der Umschüttelung der Arbeitsbereich nicht zum Auslauf geneigt ist. Es wurde festgestellt, dass beim Nachmahlen der trockenen Pulver deren Volumengewicht um das 2- bis 5-fache reduziert wird. Das Gewicht wird besonders stark beim Mahlen der trockenen organischen Produkte, beispielsweise Weizen- und Roggenkerne, Schalen der Sonnenblumen-, Reis- und Haferkerne usw. reduziert. Außerdem werden die Teilchen im elektromagnetischen Feld wegen der Reibung elektrisiert, dann zusammengeballt und am Auslauf verdichtet. Es bilden sich Stopfen.

Um diese Erscheinung zu neutralisieren, wird am Auslauf des Arbeitsbereiches eine Schnecke eingebaut. Die Leistung der Schnecke ist um das 2-bis 3-fache höher als die Leistung der Schnecke, die die Rohstoffe befördert. Auf einer gemeinsamen Welle mit der abführenden Schnecke sind alle 50 bis 80 mm Luftschrauben angeordnet. Die Welle verläuft entlang des gesamten Arbeitsbereichs. Die Flügel der Luftschrauben sind so angeordnet, dass das verarbeitete Material zum Auslauf befördert wird, wo es durch die Schnecke weiter getrieben wird. Die Nadeln, die von Luftschrauben unter Wirkung des Felds mitgenommen werden, werden zurückgebracht. Es werden Hin- und Herbewegungen im ganzen Arbeitsbereich in horizontalen und vertikalen Richtungen durchgeführt. Der genannte Umstand verbessert die Qualität des Mahlens und Mischens, weil der zentrale Bereich um die Achse des Arbeitsbereiches durch die Nadeln wegen der Einwirkung der Zentrifugalkraft verarmt.

Der Arbeitsbereich stellt ein Rohr aus Edelstahl Ch18N10T gemäß GOST 5632-72* dar. Am Auslauf ist der Durchmesser des Rohrs um 10-20 % größer, um den Auslauf der voluminösen Pulver zu erleichtern. Um die Anhaftung zu verhindern, werden die Flanken der Schnecke am Auslauf aus Gummi oder anderem flexiblen (elastischen) und beständigen Material ausgeführt.

Die Steuerungseinheit kann ein Typen-Bedienungspult darstellen. Auf diesem Pult werden notwendige Werte der künftigen Aktivierung eingestellt (wie z. B. auf Universaldrehtischen).

Die Einheit des Wärmeschutzes kann ein einheitliches Temperaturrelais darstellen, welches beim Erreichen eines Grenzwerts die Anlage abschaltet.

Wenn in VAP heterogene Systeme Flüssigkeit-Feststoff bearbeitet werden, wird die Masse dicker und verliert an Fließfähigkeit, weil die Oberfläche der verkleinerten Partikel um mehrere Größenordnungen vergrößert wird. Um die benötigte Fließfähigkeit zu bewahren, soll die Menge der flüssigen Phase erhöht werden. Die flüssige Phase soll aus einem speziellen Behälter mit der Waage zur Schnecke für die vorläufige Mischung befördert werden.

Die Erhöhung der Leistung erfolgt dank der Anwendung mehrerer Arbeitsbereiche. Jeder Arbeitsbereich ist komplett unabhängig von benachbarten Arbeitsbereichen. Die Einheiten können auf einem Gestell angeordnet werden und gemeinsame Sammelrohre haben, was aber nicht obligatorisch ist. Gemeinsame Komponenten sind die Steuerungseinheit, der Frequenzregler und der Regler der Leistung sowie der kontaktlose Phasenumschalter. Damit werden gleiche Bedingungen für die Verfahrensabläufe sichergestellt. Das Vorhandensein der gleichen Einheiten sorgt für Flexibilität der Leistung der gesamten Anlage und eröffnet die Möglichkeit, eine Einheit schnell auszuwechseln, wenn sie außer Betrieb geht. Gleichzeitig wird die Aufstellfläche der Anlage reduziert. Jede Einheit ist leicht zugänglich. Die Wartung ist vereinfacht.

Das Fehlen von einem gemeinsamen Gehäuses ermöglicht es, die Arbeitseinheiten vor Ort horizontalen und vertikalen Ebenen anzupassen. Dabei werden die Montage- und Wartungsarbeiten vereinfacht.

Die Erfindung wird anhand von in den Zeichnungen dargestellten Ausführungsbeispielen näher erläutert. Es zeigen:

Fig. 1 ein Übersichtsschema der Einrichtung zur Aktivierung der Prozesse,
Fig. 2 eine Arbeitskammer mit Nadeln,
Fig. 3 die Arbeitskammer nach Fig. 2 im Schnitt und
Fig. 4 eine Ausführungsform der Anlage.

In den Figuren 1 bis 3 sind die Haupteinheiten der Einrichtung VAP zur Aktivierung der Prozesse dargestellt, sie besteht aus einem automatischen Schalter 1, aus einem Leistungsregler 2 und aus einem Frequenzregler 3 für den Frequenzbereich von 50 Hz bis 1000 Hz und mehr. Vor der Arbeitseinheit 5 ist ein kontaktloser Phasenumschalter 4 mit einer Umschaltfrequenz von 50 bis 5000 und mehr Perioden pro Sekunde installiert. Zudem ist ein Umlaufkreis 6 mit einem automatischen Schalter 7 vorgesehen. Dieser Kreis ermöglicht es, ohne Frequenzregler 3 und Phasenumschalter 4 zu arbeiten. Der Schaltplan weist eine Wärme-Schutzeinheit 8, eine Steuerungseinheit 9 und eine Kühleinheit 10 auf.

Die Arbeitseinheit 5 (Fig. 2, 3) enthält einen Induktor mit einem Kühlkreislauf 11, einen Arbeitsbereich (Rohr) 12, der mit Nadeln 13 ausgefüllt ist, eine Hülse 14, eine Förderschnecke 15, Luftschrauben 16 und eine Abführschnecke 17.

In Fig. 4 ist eine Variante für die Arbeitseinheiten 5 mit einem Leistungsregler 2, einem Frequenzregler 3 und einem kontaktlosen Phasenumschalter 4 dargestellt. Die Anzahl der Arbeitseinheiten 5 wird durch die technische Aufgabe bestimmt, sollte aber mindestens zwei sein.

Die Einrichtung funktioniert folgendermaßen:

Es wird das Kühlsystem 10 des Induktors eingeschaltet. Die Frequenz wird mit Hilfe des Reglers 3 und die Sollleistung mit Hilfe des Reglers 2 eingestellt. Wenn der Arbeitsbereich geheizt werden soll, wird ein Programm für den kontaktlosen Phasenumschalter 4 festgelegt. Gleichzeitig werden die Silos mit Rohstoffen und Zusätzen befüllt und die Förderschnecken 15 und die Abführschnecke 17 eingeschaltet. Dann wird der automatische Schalter 1 eingeschaltet und danach auch der Induktor. Die Rohstoffe werden im Arbeitsbereich gemischt und nachgemahlen. Wenn die Masse flüssig ist, passiert sie den Arbeitsbereich 12 unter Druck, welcher durch eine Pumpe erzeugt wird. Alternativ kann die Masse drucklos den Arbeitsbereich passieren. Wenn die Rohstoffe ein trockenes Produkt darstellen, wird das Pulver mittels der Luftschrauben 16 zur Abführschnecke 17 geleitet. Die Abführschnecke 17 nimmt das zermahlene oder gemahlene Produkt auf und führt es nach außen der Verpackung oder einer weiteren Verarbeitung zu.

Am Ende der Arbeit werden keine Rohstoffe mehr befördert. Die Schnecken laufen eine bestimmte Zeit lang weiter, um die Reste der Produkte abzuführen. Dann wird der Induktor mit Hilfe des automatischen Schalters 1 ausgeschaltet. Der Kühlkreislauf 10 des Induktors wird erst nach dem kompletten Abkühlen des Arbeitsbereiches 12 ausgeschaltet.

**Literaturliste**

1. Patent Nr. 2224586, veröffentlicht am 2004.02.27.

2.	Patent Nr. 2239493, veröffentlicht am 2004.11.10.
3.	Patent Nr. 2248388, veröffentlicht am 2005.03.20.
4.	Patent Nr. 2154602, veröffentlicht am 2000.08.20.
5.	Patent Nr. 2243601, veröffentlicht am 2004.12.27.
6.	Logwinenko D.D., Scheljakow O.P. Intensivierung der verfahrenstechnischen Abläufe in Wirbelschichtanlagen. - Kiev: Technika, 1976.
7.	Patent Nr. 2072257, veröffentlicht 1993
8.	Patent Nr. 2049563, veröffentlicht 1992
9.	Werschinin N.P. Einrichtungen zur Aktivation der Prozesse. Anwendung in der Industrie und in der Landwirtschaft. Ökologie - Rostow am Don: Innowator, 2004.
10.	Fominskij L.P. Perpetum mobile Wärmeerzeuger gegen Club of Rome. Tscherkassy: Öko-Plus, 2003.
11.	Physische Enzyklopädie: In 5 Bändern, Band 2 Qualität - Magnetische Optik / Hrgs: A.M.Prochorow. Redaktion: T.M. Alexeew, A.M.Baldin, A.M.Bontsch-Brujewitsch und andere. M.: Sowjetische Enzyklopädie, 1990
12.	Physische Enzyklopädie: In 5 Bändern, Band 5 Stroboskopgeräte - Helligkeit / Hrgs: A.M.Prochorow. Redaktion: T.M. Alexeew, A.M.Baldin, A.M.Bontsch-Brujewitsch und andere. M.: Große Russische Enzyklopädie, 1998.

**Patentansprüche**

1.	Einrichtung zur Aktivierung der Prozesse, welche eine Arbeitseinheit mit einem wasser- oder ölgekühlten Induktor, eine Steuerungs- und eine Wärmeschutzeinheit aufweist,
	**dadurch gekennzeichnet,**
	**dass** die Arbeitseinheit (12) über ein Beschickungssystem und ein System zur Abführung der verarbeiteten Stoffe verfügt, wobei diese Systeme unmittelbar im Arbeitsbereich in Form von Schnecken (15, 17) und Luftschrauben (16) eingebaut sind.

2.	Einrichtung nach Anspruch 1,
	**dadurch gekennzeichnet,**
	**dass** die Fläche des Querschnitts der Arbeitseinheit (12) am Auslauf um 20 - 25 % größer ist als die Fläche des Querschnitts der Arbeitseinheit (12) am Einlauf, wobei der Durchmesser der Flanken der Abführschnecke (17) entsprechend vergrößert ist, um die Leistung der Abführschnecke (17) um das 2,0- bis 2,5-fache zu erhöhen.

3.	Einrichtung nach Anspruch 1,
	**dadurch gekennzeichnet,**
	**dass** die Flanken der Abführschnecke (17) aus elastischem Material, wie z. B. Gummi, bestehen, wobei deren Außenkanten die Innenoberflächen der Arbeitseinheit (12) berühren.

4.	Einrichtung nach Anspruch 1,
	**dadurch gekennzeichnet,**
	**dass** auf der abführenden Welle, die auf 60 % bis 70 % der Länge in den Arbeitsbereich (12) hineingeht, alle 50 bis 100 mm Luftschrauben (16) angeordnet sind, mindestens jedoch 3 Stück.

5.	Einrichtung nach Anspruch 1,
	**dadurch gekennzeichnet,**
	**dass** am Auslauf des Arbeitsbereiches (12) und zwar an der Grenze des aktiven elektromagnetischen Feldes eine Hülse (14) mit einem runden Querschnitt und einer Öffnung eingebaut ist, deren Querschnittsfläche 70 % bis 80 % des Querschnitts des Arbeitsbereiches (12) beträgt und dass die Hüllenseite, die zum Arbeitsbereich (12) gerichtet ist, einen Winkel von 20° bis 40° bildet.

6.	Einrichtung nach Anspruch 1,
	**dadurch gekennzeichnet,**
	**dass** sie mit einem Frequenzregler (3) des Stromes von 50 Hz bis 1000 Hz ausgestattet ist.

7.	Einrichtung nach Anspruch 1,
	**dadurch gekennzeichnet,**
	**dass** sie mit einem Leistungsregler (2) ausgestattet ist, der vor dem Induktor in einem Intervall von 5 kw bis 100 kw installiert ist und die Leistung ununterbrochen regelt.

8. Einrichtung nach Anspruch 1,
   **dadurch gekennzeichnet,**
   **dass** sie mit einem kontaktlosen Phasenumschalter (4) mit einer Umschaltfrequenz von 50 bis 5000 Perioden pro Sekunde ausgestattet ist.

9. Einrichtung nach Anspruch 1,
   **dadurch gekennzeichnet,**
   **dass** sie mit einem Auffänger für Gleitnadeln (13) ausgestattet ist, welcher in zylindrischer Form mit einem Tangentialeinlauf für die flüssige Phase oder in Form eines elektromagnetischen Ringes oder einer Fläche für trockenes Pulver ausgebildet ist.

10. Einrichtung nach Anspruch 1,
    **dadurch gekennzeichnet,**
    **dass** sie aus mehreren Arbeitseinheiten (5) besteht und ein gemeinsames Netzteil, eine Steuerungseinheit (9), einen Frequenzregler (3), einen kontaktlosen Phasenumschalter (4) und einen gemeinsamen Kühlkreis (10) für Induktoren aufweist.

11. Einrichtung nach Anspruch 1,
    **dadurch gekennzeichnet,**
    **dass** sie mit einem Stromkreislauf ohne Frequenzregler und ohne kontaktlosen Phasenumschalter ausgestattet ist.

Fig. 1

Fig. 2

Fig. 3

Fig. 4

## INTERNATIONAL SEARCH REPORT

| | |
|---|---|
| International application No. |
| PCT/RU2006/00554 |

| A. CLASSIFICATION OF SUBJECT MATTER |
|---|
| BOIJ 19/12 (2006 01) |
| According to International Patent Classification (IPC) or to both national classification and IPC |

| B. FIELDS SEARCHED |
|---|
| Minimum documentation searched (classification system followed by classification symbols) |
| BOI F 13/08, BO I D 35/06, C02F 1/48, BOIJ 19/12 |
| Documentation searched other than minimum documentation to the extent that such documents are included in the fields searched |
| Electronic data base consulted during the international search (name of data base and, where practicable, search terms used) |

## C. DOCUMENTS CONSIDERED TO BE RELEVANT

| Category* | Citation of document, with indication, where appropriate, of the relevant passages | Relevant to claim No. |
|---|---|---|
| Y<br>A | RU 2072257 CI (VERSHININ NIKOLAI PETROVICH ) 27 01 1997,<br>page 5, column 2, lines 9-32 | 1<br>2-11 |
| Y<br>A | SU 42491A (BARTEL GRANIGG) 31 03 1935,<br>page 1 | 1<br>2-11 |
| A | SU 1001990 A (KAZAKHSKY POLITEKHNICHESKY INSTITUT IM.<br>S. I. LENINA)   07 03.1983, column 3, lines 24-25 | 1-11 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 July 2007 (02.07.07) | 26 July 2007 (26.07.07) |

| Name and mailing address of the ISA/<br><br>**RU**<br><br>Facsimile No. | Authorized officer<br><br><br>Telephone No. |
|---|---|

Form PCT/ISA/210 (second sheet) (July 1998)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2224586 A
- WO 2239493 A
- WO 2248388 A
- WO 2154602 A
- WO 2243601 A
- WO 2072257 A
- WO 1993 A
- WO 2049563 A
- WO 1992 A

**In der Beschreibung aufgeführte Nicht-Patentliteratur**

- **LOGWINENKO D.D. ; SCHELJAKOW O.P.** Intensivierung der verfahrenstechnischen Abläufe. *Wirbelschichtanlagen. - Kiev: Technika,* 1976
- **WERSCHININ N.P.** Einrichtungen zur Aktivation der Prozesse. Anwendung in der Industrie. *Landwirtschaft. Ökologie,* 2004
- **FOMINSKIJ L.P.** *Perpetum mobile Wärmeerzeuger gegen Club of Rome,* 2003
- Qualität - Magnetische Optik. Physische Enzyklopädie. 1990, vol. 2
- Große Russische Enzyklopädie. Physische Enzyklopädie. 1998, vol. 5